# EUROPEAN PATENT APPLICATION

(11) **EP 4 588 788 A1**
(43) Date of publication of application: **23.07.2025**
(21) Application number: 24152875.1
(22) Date of filing: 19.01.2024
(51) Int. Cl.: B63H 23/04, B63H 23/30, B63H 21/20

(54) **MARINE PROPULSION DEVICE AND MARINE HYBRID DRIVE**

(71) Applicant: ZF Friedrichshafen AG, 88046 Friedrichshafen (DE); ZF PADOVA S.r.l, 35030 Caselle di Selvazzano (PD) (IT)
(72) Inventor: Pellegrinetti, Andrea, 37018 Malcesine (VR) (IT); Caracristi, Mattia, 35030 Caselle di Selvazzano (PD) (IT); Zottele, Michele, 38123 Trento (IT)
(74) Representative: ZF Friedrichshafen AG

(57) **Abstract**

The present invention relates to a marine propulsion device (1) comprising an input shaft (2), an upper bevel gear set (4) and a vertical shaft (5). The input shaft (2) is to be connected to a combustion engine (3). The upper bevel gear set (4) transmits propulsion power from the input shaft (2) to the vertical shaft (5) and the vertical shaft (5) is connected to a propeller shaft (6) via a lower bevel gear set (7).

The marine propulsion device (1) comprising an electric machine (20) with a motor shaft (21) which is arranged parallel to the vertical shaft (5). The marine propulsion device (1) comprising an output clutch (11), wherein the motor shaft (21) can be connected to the vertical shaft (5) by means of the output clutch (11).

The invention further relates to a marine hybrid drive (102) with such a marine hybrid propulsion device (1).

## Description

The present invention relates to a marine propulsion device, particularly to a marine propulsion device for a Z-drive or a pod drive, and a corresponding marine hybrid drive.

Conventional marine drives comprise a combustion engine, which can be mounted inside a hull of a ship. The power from the combustion engine is transmitted via a drive train with shafts and transmission elements to one or two propellers, which are fixed to a propeller shaft. Typically a forward and a reverse clutch are arranged in the drive train, to realize forward and reverse rotation directions of the propeller shaft.

In recent years there is an increasing demand for marine drive units with electric drive machines for environmental and efficiency reasons. For these reasons several marine drive units have been proposed in form of hybrid drives comprising a combustion engine and an electric machine for the propulsion of water vessels, like boats or ships.

In the US 2014/0187107 A1 a hybrid marine propulsion device with a combustion engine and an electric motor has been disclosed. The hybrid marine propulsion device includes a propulsion pod that houses a propulsor, which is configured to rotate about a first horizontal axis and to be driven by a vertical shaft. The drive system also includes a gearbox connected to drive the vertical shaft. The horizontally arranged combustion engine is connected via a horizontal shaft to drive the gearbox and an electric motor is arranged in a horizontal or vertical position to drive the vertical shaft via the gearbox or directly.

The purpose of the present invention is to provide an improved marine propulsion device and a marine hybrid drive with a compact layout, a broad range of applicability and highly efficient operation.

This purpose is achieved by a marine propulsion device according to claim 1 and by a marine hybrid drive according to claim 9. Further embodiments are claimed in dependent claims.

The present invention provides a marine propulsion device comprising an input shaft, an upper bevel gear set and a vertical shaft. The input shaft is to be connected to a combustion engine. The input shaft comprises some kind of connection element at a first end, for the connection with the combustion engine. Said connection element can be part of a flanged connection, a splined connection, or a coupling, just to name a few examples. The upper bevel gear set transmits propulsion power from the input shaft to the vertical shaft, which is connected to a propeller shaft via a lower bevel gear set.

The marine propulsion device further comprising an electric machine with a motor shaft which is arranged parallel to the vertical shaft. and an output clutch. The motor shaft can be connected to the vertical shaft by an output clutch. Hence, the motor shaft is drivingly connected with the vertical shaft, if the output clutch is engaged, and the motor shaft is disconnected from the vertical shaft, if the output clutch is disengaged. In an electric drive mode it is possible to maneuver forward and reverse solely by the power of the electric machine, without any actuation of the combustion engine or any further clutch, as long as the output clutch is engaged.

The output clutch can be a positive or a negative clutch. A positive clutch is normally open, i.e. disengaged. The open position of a positive clutch can be maintained by any kind of spring or elastic element. A positive clutch can be closed, i.e. engaged, by overriding the force of the spring by an external effect. A typical positive clutch is a pressure actuated clutch. Applying the correct pressure to a pressure actuated clutch will engage the clutch and torque can be transmitted by the clutch.

Particularly for embodiments, wherein the output clutch is a pressure actuated positive clutch, an oil pump can be arranged for the actuation of the output clutch. Said oil pump preferably is an external electric oil pump to enable the actuation of the output clutch during solely electric propulsion by means of the electric machine.

A negative clutch is normally closed, i.e. engaged, so that it will transmit torque from an input side to an output side in its normal status. In a negative clutch the force of at least one spring maintains the closed status. The at least one spring maintains the negative clutch closed and provides the correct force, for example to the disks of a multi-disk clutch, to transmit a nominal torque of the clutch. A negative clutch can be opened by overriding the force of the spring by an external effect. Typical negative clutches are pressure operated multi-disk clutches or electromagnetic clutches. In one kind of an electromagnetic negative clutch the torque is transmitted via form-fitting elements like a splined connection in the closed status, while springs with a comparatively low force maintain the clutch closed. By applying electric current on an electromagnetic actuator the electromagnetic negative clutch can be opened and maintained in the open status as long as the electric current is applied.

The motor shaft is arranged parallel to the vertical shaft, so that the electric machine itself is installed in a vertical position. Hence, the length of the marine propulsion device is reduced. This leads to a compact outline of the marine propulsion device and may be helpful for the installation in a hull with reduced space in a longitudinal direction. With regard to the combustion engine the electric machine can be mounted on the opposite side of the upper bevel gear set.

The output clutch, when disengaged, allows to generate electric energy, when the propeller shaft is not driven. The combustion engine can drive the electric machine in a generation mode without driving the vertical shaft and the propeller shaft when the output clutch is disengaged. The marine propulsion device can act like a so-called Genset when the propeller is not rotating.

The motor shaft can be permanently connected to a driven bevel gear of the upper bevel gear set according to one embodiment of the invention. Such a design is particularly space-saving. The word connected means that a driving power in form of torque and rotation can be transmitted via the corresponding connection. A connection can or cannot be permanent. Permanently connected means, that the connection cannot be disconnected during operation. Permanent connections for example can be rigid connections, splined or welded connections, connections via a coupling or connections of two elements which are produced as one integral piece, just to name a few examples. Connection via a set of gears which cannot be disconnected during operation are permanent connections, as well. Non-permanent connections include a clutch which can be engaged for power transmission and disengaged to cut off the power transmission during operation.

The upper bevel gear set can comprise a first bevel pinion and a second bevel pinion which are both meshing with the driven bevel gear. The first and the second bevel pinions are arranged coaxial to the input shaft and the driven bevel gear is arranged coaxial to the vertical shaft in one embodiment. The driven bevel gear can be called crown gear.

In one embodiment the marine propulsion device comprises a first engine clutch and a second engine clutch to transmit driving power from the input shaft to the vertical shaft selectively in a forward or reverse direction by engaging the first engine clutch or the second engine clutch. This is a common configuration for a pod-drive or Z-drive which is driven by a combustion engine whose crankshaft is driven in one rotational direction only. To effectively transmit driving power from the input shaft to the vertical shaft the corresponding first or second engine clutch must be engaged together with the output clutch.

The first engine clutch can be related to the first bevel pinion and the second engine clutch is related to the second bevel pinion, so that if the first engine clutch is engaged the propulsion power is transmitted via the first bevel pinion to the driven bevel gear, and if the second engine clutch is engaged the propulsion power is transmitted via the second bevel pinion. Engaging both engine clutches would block the propulsion device and should be avoided when the combustion engine is driving the input shaft. The first and the second engine clutch can be disengaged, to disconnect the vertical shaft from the combustion engine, for example during solely electric propulsion by means of the electric machine.

The motor shaft can be coupled to the vertical drive shaft via a spur gear set. In other words, there is a spur gear set positioned between the electric machine and the vertical shaft. Due to the transmission ratio between the vertical shaft and the electric machine, during the genset operation, the combustion engine can operate at low rpm and allow the optimal electric generation with low fuel consumption and low carbon emissions. When the electric machine is acting as an electric motor the transmission ratio of the spur gear set allows for the use of a fast-running electric machine which can be small and contribute to a compact layout of the marine propulsion device. Comparatively high rotation speed of the motor shaft is transmitted by the spur gear set with an appropriate transmission ratio to suitable speed and torque at the vertical shaft. The spur gear set may have one or more gear steps. In one embodiment with two gear steps the spur gear set consists of three spur gears. A driving spur gear is fastened to the second motor shaft. A driven spur gear is fastened to the vertical shaft. An intermediate spur gear is arranged in between the driving and the driven spur gears and meshing with both. The axes of the spur gears preferably are vertical axes.

In an application for a saildrive, the first electric machine can be connected to the propeller shaft by the output clutch to allow the electric energy generation and the battery recharge from the hydrogeneration effect. The effect of hydrogeneration can be used during sailing, when the propeller is driven by the water streaming through the propeller area. Hence, the propeller drives the motor shaft of the electric machine via the propeller shaft and the vertical shaft. The electric machine is switched to a generator mode and electric energy is generated. The generated electric energy can be used to recharge a battery or to feed other electric consumers. Therefore the proposed marine propulsion device can be beneficially applied in a saildrive.

In one embodiment a spur gear of said spur gear set is rigidly connected to the driven bevel gear of the upper bevel gear set, so that the drive power of the electric machine is transmitted via the spur gear set to the driven bevel gear. The rigid connection between the spur gear and the driven bevel gear can be a splined connection, as an example. In the generator mode the power flows vice versa, namely from the driven bevel gear via the spur gear set to the motor shaft of the electric machine.

The spur gear set can be encased in the intermediate casing. This way the intermediate casing can protect the spur gear set from detrimental influence of the environment and, at the same time, the intermediate casing can hold a fluid for cooling and/or lubricating the spur gear set inside. The electric machine can be supported by the intermediate casing. The intermediate casing can be fastened to a housing of the upper bevel gear set. This allows for an easy implementation of the electric machine in a conventional marine propulsion device without an electric machine. The electric machine together with the intermediate casing can be easily implemented as one module of a modular system, with the benefit of increased flexibility and variety of marine propulsion devices reusing the same components, i.e. modules, in different arrangements.

According to one embodiment the spur gear set and the output clutch can be encased in the intermediate casing. This enables an easy implementation of the electric machine together with the output clutch and the intermediate casing in a conventional marine propulsion device in a modular system, as described above.

A further embodiment of the marine propulsion device comprises a control system, which is configured to control the operation of the combustion engine, the output clutch and the electric machine. Preferably the control system is configured to control operation of the marine propulsion device at least in five operating modes as described in the following. The control system may control a first operating mode using only the combustion engine for propulsion, a second operating mode using only the electric machine for propulsion and a third operating mode using the combustion engine and the electric machine for propulsion. Further, the control system can control a fourth operating mode using the combustion engine for propulsion and for driving the electric machine to generate electric energy while the output clutch is engaged, and a fifth operating mode using the combustion engine for driving the electric machine to generate electric energy while the output clutch is disengaged.

Eventually the invention relates to a marine hybrid drive comprising a combustion engine and a marine propulsion device as described above. The specific arrangement of the components of the marine propulsion device in the described embodiments allows for a compact layout and several operating modes for efficient operation in a wide range of different applications.

The invention will be further and more particularly described in the following, by way of example only, and with reference to the accompanying figures.
- Fig. 1: shows a marine hybrid drive with a combustion engine, with an electric machine and with a marine hybrid propulsion device according to the invention in a schematic drawing and
- Fig. 2: shows a sectional view of a marine propulsion device according to the invention.

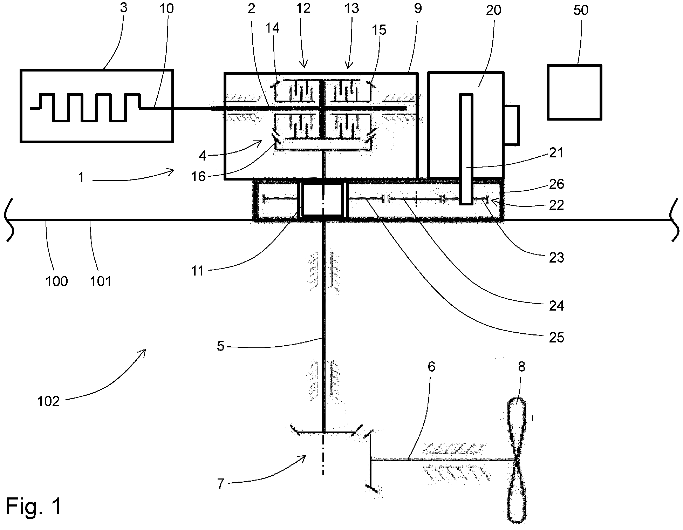

The marine hybrid drive 102 as shown in Fig. 1 comprises a marine propulsion device 1 and a combustion engine 3 as a first prime mover. The marine propulsion device 1 is mounted in an engine room inside a hull 101 of a water vessel 100. The marine propulsion device 1 comprises an electric machine 20 as a second prime mover.

The marine propulsion device 1 comprising an input shaft 2 which is permanently connected to a crank shaft 10 of the combustion engine 3. An upper bevel gear set 4 of the marine propulsion device 1 transmits propulsion power from the input shaft 2 to a vertical shaft 5, which is connected to a propeller shaft 6 via a lower bevel gear set 7. A propeller 8 is fastened to the trailing end of the propeller shaft 6. Input shaft 2 and propeller shaft 6 are both essentially oriented in a horizontal direction.

The marine propulsion device 1 further comprising an electric machine 20 with a motor shaft 21. The motor shaft 21 is arranged parallel to the vertical shaft 5, so that the electric machine 20 is oriented in a vertical direction. The motor shaft 21 is rigidly connected to a rotor of the electric machine 20. The electric machine 20 is supported by an intermediate casing 26, which is fastened to a housing 9 of the upper bevel gear set 4. In the intermediate casing 26 there are a spur gear set 22 and an output clutch 11 encased. The spur gear set 22 connects the motor shaft 21 to the driven bevel gear 16 of the upper bevel gear set 4.

The output clutch 11 is arranged at the upper end of the vertical shaft 5, so that the motor shaft 21 can be coupled to the vertical shaft 5 via the spur gear set 22 by engaging the output clutch 11.

The input shaft 2 can selectively be connected to the driven bevel gear 16 by one of a first engine clutch 12 and a second engine clutch 13. By means of the first engine clutch 12 and the second engine clutch 13 the driving power from the combustion engine 3 can be transmitted from the input shaft 2 to the vertical shaft 5 selectively in a forward or reverse direction by engaging either the first engine clutch 12 or the second engine clutch 13.

A control system 50 of the marine propulsion device 1 is configured to control the operation of the combustion engine 3, the first and the second engine clutches 12 and 13, the output clutch 11 and the electric machine 20. For this, the control system 50 is connected to appropriate control elements of the combustion engine 3, the first and the second engine clutches 12 and 13, the output clutch 11 and the electric machine 20. The first and second engine clutches 12 and 13, as well as the output clutch 11 are pressure operated multi-disk clutches.

Said control system 50 is configured to control operation of the marine propulsion device 1 at least in several operating modes. In a first operating mode solely the combustion engine 3 is used for propulsion, i.e. to drive the propeller shaft 6 with the propeller 8. In a second operating mode solely the electric machine is used for propulsion. In a third operating mode the combustion engine 3 and the electric machine 20 are used for propulsion. In a fourth operating mode the combustion engine 3 is used for propulsion and for driving the electric machine 20 to generate electric energy. In the fourth operating mode the output clutch 11 is engaged to transmit the power from the combustion engine 3 to the vertical shaft 5 and the propeller shaft 6. In a fifth operating mode the combustion engine 3 is used for driving the electric machine 20 to generate electric energy, while the output clutch 11 is disengaged, so that the propeller shaft 6 is not driven in the fifth operating mode.

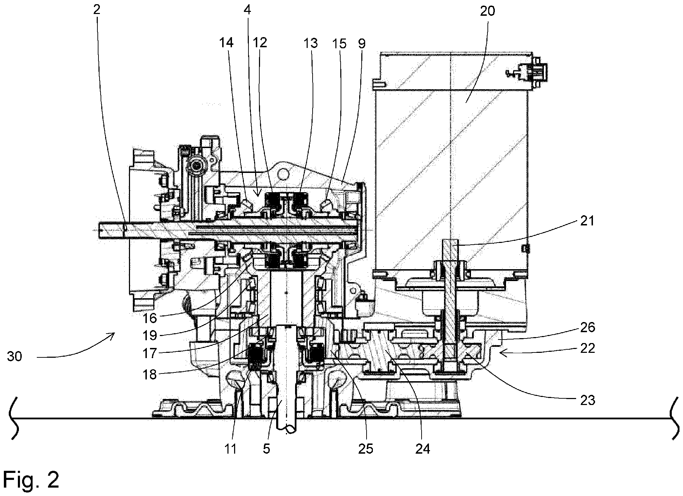

Fig. 2 shows a marine propulsion device 1 with the electric machine 9 in a more detailed sectional view. The same components are indicated with the same referals as in Fig. 1.

The motor shaft 21 of the electric machine 20 is permanently connected to the driven bevel gear 16 of the upper bevel gear set 4 via spur gear set 22. Output clutch 11 is arranged at the upper end of the vertical shaft 5 to selectively connect and disconnect the driven bevel gear 16 with the vertical shaft 5. Hence, the motor shaft 21 can be connected via the spur gear set 22 and the driven bevel gear 16 to the vertical shaft 5 by engaging the output clutch 11. The driven bevel gear 16 and the vertical shaft 5 can freely rotate with regard to each other, when the output clutch 11 is disengaged. The upper end of the vertical shaft 5 is supported in a hub 17 of driven bevel gear 16 by means of a first bearing 18. First bearing 18 is a tapered roller bearing in this embodiment.

The spur gear set 22 comprises two gear steps. A first spur gear 23 is fastened to the motor shaft 21. A second spur gear 24 is arranged in between the first spur gear 23 and a third spur gear 25 and meshes with both. The second spur gear 24 is supported in the intermediate casing 26. The intermediate casing 26 is fastened to the housing 9 of the upper bevel gear set 4.

The third spur gear 25 is rigidly connected to the driven bevel gear 16. More specific, the third spur gear 25 is fastened to one end of a hub 17 of the driven bevel gear 16. The driven bevel gear 16 with its hub 17 is supported in the housing 9 by a second bearing 19. Second bearing 19 in this embodiment is a double row tapered roller bearing.

### Referals

- 1: marine propulsion device
- 2: input shaft
- 3: combustion engine
- 4: upper bevel gear set
- 5: vertical shaft
- 6: propeller shaft
- 7: lower bevel gear set
- 8: propeller
- 9: housing
- 10: crank shaft
- 11: output clutch
- 12: first engine clutch
- 13: second engine clutch
- 14: first bevel pinion
- 15: second bevel pinion
- 16: driven bevel gear
- 17: hub
- 18: first bearing
- 19: second bearing
- 20: electric machine
- 21: motor shaft
- 22: spur gear set
- 23: first spur gear
- 24: second spur gear
- 25: third spur gear
- 26: intermediate casing
- 50: control system
- 100: water vessel
- 101: hull
- 102: marine hybrid drive

## Claims

1. Marine propulsion device (1) comprising an input shaft (2), an upper bevel gear set (4) and a vertical shaft (5), wherein the input shaft (2) is to be connected to a combustion engine (3), wherein the upper bevel gear set (4) transmits propulsion power from the input shaft (2) to the vertical shaft (5), wherein the vertical shaft (5) is connected to a propeller shaft (6) via a lower bevel gear set (7),
the marine propulsion device (1) comprising an electric machine (20) with a motor shaft (21) which is arranged parallel to the vertical shaft (5),
the marine propulsion device (1) comprising an output clutch (11), wherein the motor shaft (21) can be connected to the vertical shaft (5) by means of the output clutch (11).

2. Marine propulsion device (1) according to claim 1, wherein the motor shaft (21) is permanently connected to a driven bevel gear (16) of the upper bevel gear set (4).

3. Marine propulsion device (1) according to claim 1 or 2, wherein the motor shaft (21) is coupled to the vertical drive shaft (5) via a spur gear set (22).

4. Marine propulsion device (1) according to claim 2 or 3, wherein an output spur gear (25) is rigidly connected to the driven bevel gear (16).

5. Marine propulsion device (1) according to one of the preceding claims, wherein the electric machine (20) is supported by an intermediate casing (26), which is fastened to a housing (9) of the upper bevel gear set (4), and wherein the spur gear set (22) and the output clutch (11) are encased in the intermediate casing (26).

6. Marine propulsion device (1) according to one of the preceding claims, comprising a first engine clutch (12) and a second engine clutch (13) to transmit driving power from the input shaft (2) to the vertical shaft (5) selectively in a forward or reverse direction by engaging the first engine clutch (12) or the second engine clutch (13) in each case together with the output clutch (11).

7. Marine propulsion device (1) according to one of the preceding claims, wherein the marine propulsion device (1) comprises a control system (50), which is configured to control the operation of the combustion engine (3), the output clutch (11) and the electric machine (20).

8. Marine propulsion device (1) according to claim 7, wherein the control system (50) is configured to control operation of the marine propulsion device (1) at least in five operating modes,
a first operating mode using only the combustion engine (3) for propulsion,
a second operating mode using only the electric machine (20) for propulsion,
a third operating mode using the combustion engine (3) and the electric machine (20) for propulsion,
a fourth operating mode using the combustion engine (3) for propulsion and for driving the electric machine (20) to generate electric energy, while the output clutch (11) is engaged, and
a fifth operating mode using the combustion engine (3) for driving the electric machine (20) to generate electric energy, while the output clutch (11) is disengaged.

9. Marine hybrid drive (102) comprising a combustion engine (3) and a marine propulsion device (1) according to one of the preceding claims.
